(19) **Europäisches Patentamt / European Patent Office / Office européen des brevets**

(11) **EP 4 534 576 A1**

(12) # EUROPEAN PATENT APPLICATION

(43) Date of publication:
**09.04.2025 Bulletin 2025/15**

(21) Application number: **24195441.1**

(22) Date of filing: **20.08.2024**

(51) International Patent Classification (IPC):
*C08G 18/10* (2006.01)    *C08G 18/32* (2006.01)
*C08G 18/38* (2006.01)    *C08G 18/42* (2006.01)
*C08G 18/48* (2006.01)    *C08G 18/66* (2006.01)
*C08G 18/72* (2006.01)    *C08G 18/75* (2006.01)
*C08G 18/76* (2006.01)

(52) Cooperative Patent Classification (CPC):
(C-Sets available)
C08G 18/724; C08G 18/10; C08G 18/3206;
C08G 18/3814; C08G 18/4288; C08G 18/4837;
C08G 18/664; C08G 18/6674; C08G 18/758;
C08G 18/7621; C08G 2101/00     (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.08.2023 KR 20230109217
19.10.2023 KR 20230140652**

(71) Applicant: **SK enpulse Co., Ltd.
Pyeongtaek-si, Gyeonggi-do 17784 (KR)**

(72) Inventors:
• **JI, Mingyeong
17784 Pyeongtaek-si (KR)**

• **YOON, Jongwook
17784 Pyeongtaek-si (KR)**
• **SEO, Jangwon
17784 Pyeongtaek-si (KR)**
• **MOON, Suyoung
17784 Pyeongtaek-si (KR)**
• **HONG, Taeil
17784 Pyeongtaek-si (KR)**
• **MIN, Eungi
17784 Pyeongtaek-si (KR)**

(74) Representative: **Dehns
10 Old Bailey
London EC4M 7NG (GB)**

(54) **ECO-FRIENDLY POLISHING PAD AND MANUFACTURING METHOD THEREOF**

(57) The present invention relates to an environmentally friendly polishing pad and to a process for preparing the same. The polishing pad prepared from a polyurethane resin comprising a bio-based polymer polyol has excellent environmental friendliness and has physical properties such as hardness and modulus required for a CMP process. Thus, it can be used in the manufacture of semiconductor substrates to demonstrate excellent performance.

[Fig. 1]

EP 4 534 576 A1

(52) Cooperative Patent Classification (CPC): (Cont.)

C-Sets
**C08G 18/10, C08G 18/3814**

## Description

### Technical Field

Embodiments relate to a polishing pad for use in a chemical mechanical planarization (CMP) process of semiconductor devices. Specifically, they relate to a polishing pad based on biomass having environmental friendliness and to a process for preparing the same.

### Background Art

The chemical mechanical planarization (CMP) process in a process for preparing semiconductors refers to a step in which a semiconductor substrate such as a wafer is fixed to a head and in contact with the surface of a polishing pad mounted on a platen, and the platen and the head are relatively moved to planarize the irregularities on the surface of the semiconductor substrate.

In this CMP process, the polishing pad is required to have stable physical properties because it greatly affects the surface processing quality of the semiconductor substrate. In particular, since the polishing rate in a CMP process may vary sensitively depending on the components contained in the polishing pad and their physical properties, it is necessary to optimize the components contained in the polishing pad and their physical properties.

Meanwhile, as environmental problems such as climate change have arisen in recent years, public opinion is forming that companies should take social responsibility for building a society capable of sustainable development through ESG management such as "carbon neutrality." Accordingly, various companies are attempting to manufacture various products by applying biomass raw materials derived from plants instead of petroleum-based raw materials.

In line with this trend, attempts are needed to increase environmental friendliness by applying biomass raw materials to polishing pads that have been previously manufactured using petroleum-based raw materials. Further, even if such biomass raw materials are used, it is necessary to provide a polishing pad with physical properties that can achieve the level of a polishing rate required in a CMP process.

[Prior Art Document]

[Patent Document]

(Patent Document 1) Korean Laid-open Patent Publication No. 2018-0044771

### Detailed Description of the Invention

### Technical Problem

An embodiment aims to provide a polishing pad that is excellent in environmental friendliness and capable of achieving the level of polishing rate required in a CMP process.

In addition, an embodiment aims to provide a process for preparing a polishing pad capable of efficiently preparing the polishing pad described above.

### Solution to the Problem

According to an embodiment, there is provided a polishing pad, which comprises a polishing layer, wherein the polishing layer comprises a polyurethane resin, the polyurethane resin comprises a polyol and a polyisocyanate, and the polyol comprises a bio-based polymer polyol.

According to another embodiment, there is provided a process for preparing a polishing pad, which comprises preparing a urethane prepolymer comprising a polyol and an polyisocyanate; and curing the urethane prepolymer to prepare a polishing layer comprising a polyurethane resin, wherein the polyol comprises a bio-based polymer polyol.

According to another embodiment, there is provided a polishing pad, which comprises a polishing layer comprising a polyurethane resin, wherein the polyurethane resin comprises a polyol component and a polyisocyanate component, and the polyol component comprises a bio-based polymer polyol and a bio-based monomer polyol.

According to another embodiment, there is provided a process for preparing a polishing pad, which comprises preparing a bio-based urethane prepolymer using a polyurethane resin comprising a polyol component and a polyisocyanate component; and curing the bio-based urethane prepolymer to prepare a polishing layer, wherein the polyol component comprises a bio-based polymer polyol and a bio-based monomer polyol.

**Advantageous Effects of the Invention**

The polishing pad according to an embodiment is prepared using a composition comprising a biomass raw material, wherein the composition and content of the biomass raw material are adjusted to control the content of biomass contained in the polishing pad to a certain range. As a result, it is excellent in environmental friendliness and has such physical properties as hardness, modulus, tensile strength, and elongation suitable for a CMP process, along with excellent polishing rate and pad cut rate.

In addition, the polishing pad according to an embodiment comprises a polishing layer comprising a polyurethane resin, wherein the polyurethane resin comprises a polyol component and a polyisocyanate component, and the polyol component comprises a bio-based polymer polyol and a bio-based monomer polyol. Since it is excellent in environmental friendliness and has the physical properties required for a CMP process, it can be used in the manufacture of semiconductor substrates to exhibit excellent performance.

Accordingly, when a CMP process is carried out using the polishing pad according to an embodiment, a semiconductor substrate such as a wafer with excellent surface processing quality can be provided while a high polishing rate is achieved.

**Brief Description of the Drawings**

Fig. 1 shows a $^{13}$C-NMR spectrum of a polishing layer according to an embodiment.
Fig. 2 shows a $^{13}$C-NMR spectrum of a polishing layer according to another embodiment.
Fig. 3 is a cross-sectional view of a polishing pad according to an embodiment.
Fig. 4 illustrates a process for preparing a semiconductor device using a polishing pad according to an embodiment.

[Reference Numeral of the Drawings]

1: peak 1
2: peak 2
3: peak 3
4: peak 4
5: peak 5
10: polishing layer
20: adhesive layer
30: support layer
100: polishing pad
200: platen
300: conditioner
400: polishing slurry
510: polishing head
520: carrier
600: semiconductor substrate (wafer)

**Best Mode for Carrying out the Invention**

In the following description of the embodiments, a detailed description of known functions and configurations incorporated herein will be omitted when it is determined that the description may make the subject matter of the embodiments rather unclear. In addition, for the sake of description, the sizes of individual elements in the appended drawings may be exaggeratedly depicted or omitted, and they may differ from the actual sizes.

In the present specification, when one component is described to be formed on/under another component or connected or coupled to each other, it covers the cases where these components are directly or indirectly formed, connected, or coupled through another component. In addition, it should be understood that the criterion for the terms on and under of each component may vary depending on the direction in which the object is observed.

In this specification, terms referring to the respective components are used to distinguish them from each other and are not intended to limit the scope of the embodiment. In addition, in the present specification, a singular expression is interpreted to cover a plural number as well unless otherwise specified in the context.

Throughout the present specification, the terms first, second, and the like are used to describe various components. But the components should not be limited by the terms. The terms are used for the purpose of distinguishing one element from another.

Throughout the present specification, when a part is referred to as "comprising" an element, it is understood that other elements may be comprised, rather than other elements are excluded, unless specifically stated otherwise.

For convenience, the molecular weight of compounds or polymers described in the present specification is expressed in units of molar mass, but it may be understood as relative mass with reference to carbon-12. In addition, the molecular weight of compounds or polymers described in the present specification may be interpreted as a number average molecular weight or a weight average molecular weight, for example, as a number average molecular weight.

All numerical ranges related to the physical properties, dimensions, and the like of a component used herein are to be understood as being modified by the term "about," unless otherwise indicated.

In the numerical range that limits the size, physical properties, and the like of components described in the present specification, when a numerical range limited with the upper limit only and a numerical range limited with the lower limit only are separately exemplified, it should be understood that a numerical range combining these upper and lower limits is also encompassed in the exemplary scope of the invention.

In the present specification, the "bio-based" component refers to a component obtained by using, as all or part of the raw material, biomass derived from plants, rather than fossil fuel-based materials such as petroleum. Specifically, it is a component that contains carbon-14 ($^{14}$C), a radioactive carbon isotope, which is present only in bio-based materials, while it is not present in fossil fuel-based materials such as oil.

For example, a "bio-based polyol" refers to a polyol obtained by using, as all or part of the raw material, biomass derived from plants. Since it contains radioactive carbon ($^{14}$C), it is distinguishable from polyols obtained from fossil fuel-based materials that do not contain it.

The biomass is a concept that broadly covers bio-derived materials such as animal and plant resources such as trees, flowers, corn, sugarcane, grass, whale oil, algae, and the like; or organic waste resources such as livestock manure, food waste, sawdust, and the like. It may contain radioactive carbon ($^{14}$C).

## Polishing pad

The polishing pad according to an embodiment comprises a polishing layer, wherein the polishing layer comprises a polyurethane resin, the polyurethane resin comprises a polyol and a polyisocyanate, and the polyol comprises a bio-based polymer polyol.

According to another embodiment, there is provided a polishing pad, which comprises a polishing layer comprising a polyurethane resin, wherein the polyurethane resin comprises a polyol component and a polyisocyanate component, and the polyol component comprises a bio-based polymer polyol and a bio-based monomer polyol.

The polyurethane resin of the polishing layer may be prepared from a urethane prepolymer comprising a polyol and a polyisocyanate. More specifically, it may be prepared from a composition comprising the urethane prepolymer, a curing agent, and a foaming agent.

## Bio-based polymer polyol

According to an embodiment, the polyurethane resin comprises a polyol component, and the polyol component comprises a bio-based polymer polyol.

The bio-based polymer polyol is a polymer polyol derived from biomass and comprising carbon-14 ($^{14}$C), a radioactive carbon isotope. It has 2 or more hydroxyl (OH) groups and may have 2 or more, 5 or more, or 10 or more repeat units.

Specifically, the bio-based polymer polyol may comprise at least one selected from the group consisting of a bio-based polyether polyol, a bio-based polyester polyol, a bio-based polycarbonate polyol, and a bio-based polycaprolactam polyol.

When the characteristics such as molecular weight, hydroxyl group value (OH-value), and the number of functional groups of the bio-based polymer polyol are adjusted to specific ranges, it may be more advantageous for providing a polishing pad with excellent flexibility, elastic restoring force, permanent strain, weatherability, and hydrolysis resistance.

In addition, it is important to control the characteristics such as weight average molecular weight, hydroxyl group value (OH-value), and the number of functional groups of the bio-based polymer polyol in order to enhance such characteristics as flexibility, elastic restoring force, permanent strain, weatherability, and hydrolysis resistance of a polishing pad.

For example, the bio-based polymer polyol may have a molecular weight of 300 g/mole or more, 400 g/mole or more, 450 g/mole or more, 500 g/mole or more, 600 g/mole or more, 700 g/mole or more, or 800 g/mole or more, and 5,000 g/mole or less, 4,000 g/mole or less, 3,000 g/mole or less, 2,700 g/mole or less, 2,300 g/mole or less, 1,800 g/mole or less, 1,500 g/mole or less, or 1,200 g/mole or less.

As a specific example, the molecular weight of the bio-based polymer polyol may be 400 g/mole to 3,000 g/mole.

More specifically, the molecular weight of the bio-based polymer polyol may be 450 g/mole to 2,700 g/mole, 500 g/mole to 2,300 g/mole, 600 g/mole to 1,800 g/mole, 700 g/mole to 1,500 g/mole, or 800 g/mole to 1,200 g/mole.

In addition, the bio-based polymer polyol may have a hydroxyl group value (OH-value) of, for example, 35 mg KOH/g or more, 45 mg KOH/g or more, 60 mg KOH/g or more, 70 mg KOH/g or more, 80 mg KOH/g or more, or 90 mg KOH/g or more, and 250 mg KOH/g or less, 230 mg KOH/g or less, 200 mg KOH/g or less, 180 mg KOH/g or less, 150 mg KOH/g or less, or 130 mg KOH/g or less.

In a specific embodiment, the hydroxyl group value (OH-value) of the bio-based polymer polyol may be 35 mg KOH/g to 250 mg KOH/g.

More specifically, the hydroxyl group value (OH-value) of the bio-based polymer polyol may be 45 mg KOH/g to 230 mg KOH/g, 60 mg KOH/g to 200 mg KOH/g, 70 mg KOH/g to 180 mg KOH/g, 80 mg KOH/g to 150 mg KOH/g, 90 mg KOH/g to 130 mg KOH/g, or 100 mg KOH/g to 125 mg KOH/g.

The bio-based polymer polyol may have a number of functional groups of 2 or more or 3 or more, and 10 or less, 5 or less, 4 or less, or 3 or less. More specifically, the number of functional groups of the bio-based polymer polyol may be 2 to 4.

Examples of the bio-based polymer polyol commercially available may be SK Chemical's EcoTRION H2000 and EcoTRION H1000; SK Pucore's BI-550 and B-1184; BASF's Sovermol 1102, Sovermol 1005, Sovermol 805, and Sovermol 815; Noroo's BP-04 and BP-05; Croda's Priplast 2033 and Priplast 1838; Allessa's Velvetol H500, Velvetol H1000, Velvetol H2000, and Velvetol H2700; and a combination thereof.

The content of biomass in the bio-based polymer polyol may be, for example, 10% by weight or more, 20% by weight or more, 30% by weight or more, 50% by weight or more, 60% by weight or more, 70% by weight or more, or 80% by weight or more, and 100% by weight or less, 90% by weight or less, or 85% or less.

More specifically, the biomass content may be 20% by weight to 100% by weight, 40% by weight to 100% by weight, 50% by weight to 100% by weight, 60% by weight to 100% by weight, 70% by weight to 100% by weight, or 80% by weight to 100% by weight, based on the total weight of the bio-based polymer polyol. As the biomass content of the bio-based polymer polyol is within the above range, it is possible to provide a polishing pad with excellent environmental friendliness, along with the physical properties required for a CMP process.

The biomass content may refer to a value measured in accordance with the ASTM D 6866 standard. The ASTM D 6866 standard is a standard analysis method for determining the content of biomass in a solid sample, a liquid sample, or a gaseous sample using a radiometric dating method or an accelerator mass spectrometry (AMS) method.

The radiometric dating method may comprise the following procedure. Specifically, a sample (specimen) that has been pre-treated (e.g., foreign substances have been removed) is put into a special vacuum device and burned to make carbon dioxide. Next, molten lithium is mixed to prepare lithium carbide, which is then cooled, and lithium carbide is reacted with water to make acetylene gas. The acetylene gas is then purified and converted to benzene using a silica-alumina catalyst. Next, benzene, which is composed of 92% carbon, is mixed with a scintillation chemical material, and then the radioactivity is measured with a liquid scintillation counter for about 2 days.

The accelerator mass spectrometry method may comprise the following procedure. Specifically, a sample (specimen) that has been pre-treated (e.g., foreign substances have been removed) is burned to make purified carbon dioxide, which is then reacted with hydrogen in a special glass vacuum chamber to make graphite. Graphite, which is composed of 100% carbon, is then placed in an accelerator mass spectrometer and measured for radioactivity for about 30 minutes.

**Bio-based monomer polyol**

According to an embodiment, the polyurethane resin comprises a polyol component, and the polyol component comprises a bio-based monomer polyol.

Specifically, the polyurethane resin may further comprise at least one bio-based monomer polyol. More specifically, the polyurethane resin may be prepared from a composition comprising at least one bio-based monomer polyol.

Accordingly, the polyurethane resin may comprise a repeat unit derived from the bio-based monomer polyol, along with a repeat unit derived from the bio-based polymer polyol.

The bio-based monomer polyol is a monomer polyol derived from biomass and comprising carbon-14 ($^{14}$C), a radioactive carbon isotope. It has 2 or more hydroxyl (OH) groups.

As the bio-based monomer polyol is employed together with the bio-based polymer polyol, the crosslinking density of the urethane prepolymer can be enhanced to secure the hardness and durability required for a CMP process.

More specifically, bio-based 1,3-propanediol may be most preferable as the bio-based monomer polyol in light of the weight average molecular weight and chain length, but it is not limited thereto.

The bio-based monomer polyol may comprise at least one selected from the group consisting of bio-based ethylene glycol, bio-based diethylene glycol, bio-based 1,2-propylene glycol, bio-based 1,3-propanediol, bio-based 2-methyl-1,3-propanediol, bio-based 1,3-butanediol, bio-based 1,4-butanediol, bio-based 2,3-butanediol, bio-based 1,5-pentanediol, bio-based 1,9-nonediol, bio-based 1,10-decanediol, and bio-based isosorbide.

More specifically, the bio-based monomer polyol may comprise at least one selected from the group consisting of bio-based 1,3-propanediol, bio-based 1,3-butanediol, bio-based 1,4-butanediol, bio-based 2,3-butanediol, bio-based 1,5-pentanediol, bio-based 1,9-nonanediol, bio-based 1,10-decanediol, and bio-based isosorbide.

In addition, the bio-based monomer polyol may have a weight average molecular weight of 50 g/mole to 200 g/mole. For example, the molecular weight of the bio-based monomer polyol may be 55 g/mole to 180 g/mole, 60 g/mole to 150 g/mole, 65 g/mole to 130 g/mole, 70 g/mole to 100 g/mole, or 75 g/mole to 90 g/mole. When the molecular weight of the bio-based monomer polyol is within the above range, it is possible to provide a polishing pad with excellent hardness and durability.

The bio-based monomer polyol may have a biomass content of 50% by weight or more, 80% by weight or more, 90% by weight or more, 80% by weight to 100% by weight, or 85% by weight to 100% by weight, more specifically, 100% by weight, based on the total weight of the bio-based monomer polyol.

When the biomass content of the bio-based monomer polyol is within the above range, it may be more advantageous for providing a polishing pad with excellent environmental friendliness, along with the physical properties required for a CMP process.

In addition, the weight ratio of the bio-based polymer polyol and the bio-based monomer polyol may be 5 to 20:0.01 to 2. For example, the weight ratio of the bio-based polymer polyol and the bio-based monomer polyol may be 5 to 20:0.02 to 2, 5 to 18:0.05 to 2, 5 to 15:0.1 to 2, 8 to 20:0.2 to 2, or 8 to 15:0.5 to 1.5.

Additional polyol

The polyol contained in the polyurethane resin that constitutes the polishing layer may further comprise a petroleum-based polyol in addition to the bio-based polyol.

Specifically, the polyol may further comprise at least one selected from the group consisting of a petroleum-based polymer polyol and a petroleum-based monomer polyol.

The petroleum-based polymer polyol may comprise at least one selected from the group consisting of a polyether polyol, a polyester polyol, a polycarbonate polyol, and a polycaprolactam polyol, commonly known.

In addition, the petroleum-based monomer polyol may comprise at least one selected from the group consisting of ethylene glycol, diethylene glycol, 1,2-propylene glycol, 1,3-propanediol, 2-methyl-1,3-propanediol, dipropylene glycol, 1,3-butanediol, 1,4-butanediol, 2,3-butanediol, n-butanol, isobutanol, 1,5-pentanediol, 1,6-hexanediol, 2-octanol, 1,9-nonanediol, and 1,10-decanediol, commonly known.

When the polyol in the polyurethane resin comprises both the bio-based polyol (a) and the petroleum-based polyol (b), their mixing ratio (a:b) may be a mole ratio of 1:0.65 to 1:3, a mole ratio of 1:0.65 to 1: 1.5, a mole ratio of 1:0.65 to 1:1.25, a mole ratio of 1:0.65 to 1:0.92, a mole ratio of 1:0.68 to 1:0.90, a mole ratio of 1:0.72 to 1:0.88, a mole ratio of 1:0.75 to 1:0.86, or a mole ratio of 1:0.80 to 1:0.85.

Within the above range of mixing ratio, it is more advantageous for providing a polishing pad with excellent environmental friendliness, along with the physical properties required for a CMP process.

**Polyisocyanate**

According to an embodiment, the polyurethane resin may comprise a polyisocyanate. Specifically, the polyisocyanate contained in the polyurethane resin constituting the polishing layer may comprise a commonly known polyisocyanate. For example, the polyisocyanate may comprise a petroleum-based polyisocyanate, but it is not limited thereto.

Specifically, the polyisocyanate may comprise at least one selected from the group consisting of an aromatic diisocyanate, an aliphatic diisocyanate, and a cycloaliphatic diisocyanate. More specifically, the isocyanate may comprise at least one selected from the group consisting of an aromatic diisocyanate and a cycloaliphatic diisocyanate.

For example, the poisocyanate may comprise at least one selected from the group consisting of toluene diisocyanate (TDI), naphthalene-1,5-diisocyanate, p-phenylene diisocyanate, tolidine diisocyanate, 4,4'-diphenylmethane diisocyanate, hexamethylene diisocyanate, 4,4'-methylenedicyclohexyl diisocyanate (H12MDI), and isoporone diisocyanate.

Preferably, the polyisocyanate may comprise at least one selected from toluene diisocyanate (TDI) and 4,4'-methylenedicyclohexyl diisocyanate (H12MDI). When an isocyanate exemplified above is employed, a hard segment is formed, which may be more advantageous in providing a polishing pad with a required level of hardness.

When the toluene diisocyanate (TDI) (x) and the 4,4'-methylenedicyclohexyl diisocyanate (H12MDI) (y) are mixed, their mixing ratio (x:y) is not particularly limited, but it may specifically be a weight ratio of 3:1 to 20:1, a weight ratio of 5:1 to 18:1, a weight ratio of 7:1 to 16:1, or a weight ratio of 8:1 to 13:1.

**Curing agent and foaming agent**

According to an embodiment, the polyurethane resin constituting the polishing layer may further comprise a curing agent and a foaming agent.

The curing agent may comprise a compound that is subjected to a curing reaction with the urethane prepolymer for preparing the polyurethane resin.

Specifically, the curing agent may comprise at least one selected from the group consisting of an aromatic amine, an aliphatic amine, an aromatic alcohol, and an aliphatic alcohol.

For example, the curing agent may comprise at least one selected from the group consisting of 4,4'-methylenebis(2-chloroaniline), diethyltoluenediamine, diaminodiphenylmethane, dimethyl thio-toluene diamine, propanediol bis(p-aminobenzoate), diaminodiphenyl sulphone, m-xylylenediamine, isophoronediamine, ethylenediamine, diethylenetriamine, triethylenetetramine, polypropylenediamine, polypropylenetriamine, and bis(4-amino-3-chlorophenyl) methane.

The foaming agent is for forming a pore structure in the polishing layer and may comprise at least one selected from the group consisting of a solid phase foaming agent, a liquid phase foaming agent, and a gas phase foaming agent (e.g., inert gas such as nitrogen, argon, helium, and the like).

Specifically, the foaming agent may be a solid phase foaming agent comprising expandable particles. The expandable particles are particles having a characteristic that can be expanded by heat or pressure. The size thereof in the final polishing layer may be determined by heat or pressure applied in the process of preparing the polishing layer. More specifically, the expandable particles may comprise expanded particles, unexpanded particles, or a combination thereof.

The thermally expanded particles are particles expanded in advance by heat. They may refer to particles whose final size is determined when expanded by heat or pressure applied during the process of preparing the polishing layer.

The expandable particles may comprise a shell of a resin; and an expansion-inducing component encapsulated inside the shell.

The shell of a resin may comprise a thermoplastic resin. Specifically, the thermoplastic resin may be at least one selected from the group consisting of a vinylidene chloride-based copolymer, an acrylonitrile-based copolymer, a methacrylonitrile-based copolymer, and an acrylic-based copolymer.

The expansion-inducing component may comprise at least one selected from the group consisting of a hydrocarbon compound, a chlorofluoro compound, and a tetraalkylsilane compound.

Specifically, the hydrocarbon compound may comprise at least one selected from the group consisting of ethane, ethylene, propane, propene, n-butane, isobutane, n-butene, isobutene, n-pentane, isopentane, neopentane, n-hexane, heptane, and petroleum ether.

The chlorofluoro compound may comprise at least one selected from the group consisting of trichlorofluoromethane ($CCl_3F$), dichlorodifluoromethane ($CCl_2F_2$), chlorotrifluoromethane ($CClF_3$), and dichlorotetrafluoroethane ($CClF_2$-$CClF_2$).

The tetraalkylsilane compound may comprise at least one selected from the group consisting of tetramethylsilane, trimethylethylsilane, trimethylisopropylsilane, and trimethyl-n-propylsilane.

In addition, the solid phase foaming agent may have an average particle diameter of 5 μm to 200 μm, specifically, 10 μm to 100 μm, 15 μm to 70 μm, or 20 μm to 45 μm. Here, when the solid phase foaming agent comprises the thermally expanded particles as the expandable particles, the average particle diameter may refer to the average particle diameter of the thermally expanded particles themselves. In addition, when the solid phase foaming agent comprises the unexpanded particles as the expandable particles, the average particle diameter may refer to the average particle diameter of the particles upon expansion by heat or pressure.

**Characteristics of the polishing layer**

The polishing layer may have a thickness of 0.5 mm to 5 mm. For example, the thickness of the polishing layer may be 0.8 mm to 4.0 mm, 1.0 mm to 3.0 mm, 1.5 mm to 2.5 mm, 1.7 mm to 2.3 mm, or 2.0 mm to 2.2 mm. When the thickness of the polishing layer satisfies the above range, the basic physical properties as a polishing pad can be sufficiently secured while the size variation of the micropores between the upper and lower portions is minimized.

In addition, the polishing layer may have a hardness of 45 Shore D or more. For example, the hardness of the polishing layer may be 46 Shore D or more, 50 Shore D or more, 53 Shore D or more, or 56 Shore D or more, and 80 Shore D or less, 70 Shore D or less, 68 Shore D or less, 65 Shore D or less, or 60 Shore D or less.

As a specific example, the hardness of the polishing layer may be 45 Shore D to 80 Shore D, 45 Shore D to 70 Shore D, 46 Shore D to 60 Shore D, 50 Shore D to 68 Shore D, 53 Shore D to 66 Shore D, 53 Shore D to 65 Shore D, 55 Shore D to 64 Shore D, 56 Shore D to 60 Shore D, or 56 Shore D to 62 Shore D.

The Shore D hardness may be measured using a hardness meter.

The polishing layer may have a tensile strength of 5 $N/mm^2$ or more, 10 $N/mm^2$ or more, 15 $N/mm^2$ or more, or 17 $N/mm^2$ or more, and 30 $N/mm^2$ or less, 28 $N/mm^2$ or less, 27 $N/mm^2$ or less, 26 $N/mm^2$ or less, 25 $N/mm^2$ or less, 23 $N/mm^2$ or less, or 20 $N/mm^2$ or less.

As a specific example, the tensile strength of the polishing layer may be 5 $N/mm^2$ to 30 $N/mm^2$, 10 $N/mm^2$ to 25 $N/mm^2$, 12 $N/mm^2$ to 27 $N/mm^2$, 15 $N/mm^2$ to 25 $N/mm^2$, 15 $N/mm^2$ to 23 $N/mm^2$, 20 $N/mm^2$ to 25 $N/mm^2$, 16 $N/mm^2$ to 24 $N/mm2$, 17 $N/mm^2$ to 27 $N/mm^2$, or 18 $N/mm^2$ to 23 $N/mm^2$.

To determine the tensile strength, as referred to herein, the polishing layer may be measured for the highest strength value just before fracture in a tensile test at a speed of 50 mm/minute using a universal test machine (UTM).

In addition, the polishing layer may have an elongation of 50% or more, 70% or more, 90% or more, 106% or more, or 120% or more, and 300% or less, 250% or less, 200% or less, or 150% or less. As a specific example, the elongation of the polishing layer may be 50% to 300%, 60% to 150%, 62% to 120%, 80% to 200%, 90% to 130%, 85% to 120%, 85% to 115%, 95% to 110%, or 98% to 105%. The elongation may be an elongation at break.

To determine elongation, as referred to herein, the polishing layer may be measured for the maximum deformation length immediately before fracture in a tensile test at a speed of 50 mm/minute using a universal test machine (UTM), and the ratio of the maximum deformation length to the initial length can be obtained as a percentage (%).

According to an embodiment, the polishing layer may have a hardness of 45 shore D to 70 shore D, a tensile strength of 15 $N/mm^2$ to 27 $N/mm^2$, and an elongation of 50% to 150%. Within the above characteristic ranges of the polishing layer, performance such as polishing rate and pad cut rate in a CMP process can be further enhanced.

According to another embodiment, the polishing layer may have a hardness of 55 shore D to 64 shore D, a tensile strength of 20 $N/mm^2$ to 25 $N/mm^2$, and an elongation of 85% to 115%. As the hardness, tensile strength, and elongation of the polishing layer are adjusted to the above ranges, respectively, a CMP process can be carried out stably, and the polishing pad can be made lighter.

In particular, as the characteristics of the polishing layer satisfy all of the above ranges, performance such as polishing rate and pad cut rate, as well as polishing speed, in a CMP process can be further enhanced. More specifically, as the hardness and polishing rate of the polishing layer are controlled to the above ranges, an appropriate polishing rate in a CMP process of the polishing pad can be secured. As the elongation of the polishing layer is controlled to the above range, it is possible to effectively prevent defects such as it becoming brittle, thereby causing breakage thereof, or scratches remaining on the surface of the object to be polished.

In addition, the average size of pores formed in the polishing layer is not particularly limited, but it may specifically be 10 $\mu$m to 40 $\mu$m, 15 $\mu$m to 35 $\mu$m, 18 $\mu$m to 30 $\mu$m, or 20 $\mu$m to 25 $\mu$m.

As the thickness, hardness, and average pore size of the polishing layer each satisfy the above range, a CMP process can be carried out more stably, and the polishing pad can be made lighter.

The polishing layer may have a biomass content of 2% by weight to 70% by weight. Specifically, the biomass content of the polishing layer may be 3% by weight to 65% by weight, 5% by weight to 60% by weight, 6% by weight to 58% by weight, 7% by weight to 56% by weight, 8% by weight to 54 w% by weight, 20% by weight to 52% by weight, or 35% by weight to 50% by weight, based on the total weight of the polishing layer.

Meanwhile, the polishing layer is a hardened product composed of a compound having a specific chemical structure. Final polishing performance, such as polishing rate and degree of defects, can be determined depending on the chemical structure of the compound and the bonding structure and bonding strength of the repeat units that constitute the chemical structure. The compound contained in the polishing layer comprises various types of chemical bonding structures. When the polishing layer is treated under specific processing conditions, the bonding may be severed or maintained depending on the bonding strength of each bonding structure. As a result, the shape of the carbon-13 nuclear magnetic resonance ($^{13}$C-NMR) spectrum of a test composition of the polishing layer may vary. Specifically, the shape of the carbon-13 nuclear magnetic resonance ($^{13}$C-NMR) spectrum is a characteristic that is comprehensively related to not only the components and contents for preparing the polishing layer, but also various process conditions during the preparation process of the polishing layer and processing conditions for obtaining the processing composition.

In the polishing pad according to an embodiment, when 1 g of the polishing layer is added to an aqueous solution of potassium hydroxide (KOH) having a concentration of 0.3 M, which is reacted for 48 hours at a temperature of 150°C in a sealed container to obtain a test composition, and a $^{13}$C-NMR spectrum is measured therefor, it may have a first peak appearing between 28 ppm and 31 ppm; a second peak appearing between 31 ppm and 33 ppm; and a third peak appearing between 67 ppm to 71 ppm.

The $^{13}$C-NMR analysis may use a nuclear magnetic resonance (NMR) device (e.g. JEOL 500 MHz, 90° pulse) at room temperature.

The polishing layer is composed of a compound having a chemical bonding structure corresponding to the spectral characteristics, which produces the effect that the polishing performance of the polishing pad is enhanced.

The ratio (p 1/p2) of the area (p1) of the first peak to the area (p2) of the second peak may be, for example, 2 or more, 3 or more, 4 or more, or 4.4 or more, and 8 or less, 7 or less, 6 or less, or 5.7 or less. As a specific example, the ratio of the area of the first peak to the area of the second peak may be 4.4 to 5.7.

The ratio (p3/p2) of the area (p3) of the third peak to the area (p2) of the second peak may be, for example, 6 or more, 7 or more, 8 or more, or 8.2 or more, and 11 or less, 10 or less, 9 or less, or 8.8 or less. As a specific example, the ratio of the area of the third peak to the area of the second peak may be 8.2 to 8.8.

In a specific embodiment, the ratio of the area of the first peak to the area of the second peak may be 4.4 to 5.7, and the ratio of the area of the third peak to the area of the second peak may be 8.2 to 8.8.

Within the above ranges of peak area ratio, the polishing layer has appropriate hardness and elongation, so that the polishing rate can be further enhanced while defects can be reduced.

In particular, the above test conditions of $^{13}$C-NMR (that is, 1 g of the polishing layer is added to an aqueous solution of potassium hydroxide (KOH) having a concentration of 0.3 M, which is reacted for 48 hours at a temperature of 150°C in a sealed container to obtain a test composition) show a $^{13}$C-NMR spectrum that is highly correlated with the polishing performance of a final polishing pad, as compared with other test compositions prepared under different conditions.

In the conditions for treating the polishing layer, the pressure in the sealed container may be 3 bar or less. However, it is sufficient as long as a sealed container is used, and the pressure does not need to be adjusted to specific conditions.

In addition, the $^{13}$C-NMR spectrum of the polishing layer may have additional characteristic peaks in addition to the first to third peaks.

In the polishing pad according to an embodiment, when a $^{13}$C-NMR spectrum is measured under the same conditions as above, it may further comprise a fourth peak appearing between 33 ppm to 36 ppm and a fifth peak appearing between 61 ppm to 63 ppm.

The polishing layer is composed of a compound having a chemical bonding structure corresponding to the spectral characteristics having the additional peaks, which produces the effect that the polishing performance of the polishing pad is enhanced.

The ratio (p4/p5) of the area (p4) of the fourth peak to the area (p5) of the fifth peak may be, for example, 1 or more, 2 or more, or 2.1 or more, and 9 or less, 8 or less, 7 or less, or 6.4 or less.

In a specific embodiment, the ratio of the area of the fourth peak to the area of the fifth peak may be 2.1 to 6.4.

Within the above range of peak area ratio, the polishing layer has appropriate hardness and elongation, so that the polishing rate can be further enhanced while defects can be reduced.

The shape of the $^{13}$C-NMR spectrum of the test composition of the polishing layer may be determined by a comprehensive result of factors such as the types and contents of the raw material monomers in the process of preparing the polishing layer, process temperature and pressure conditions, and the types and contents of additives such as curing agents and foaming agents.

Additional constituent layers

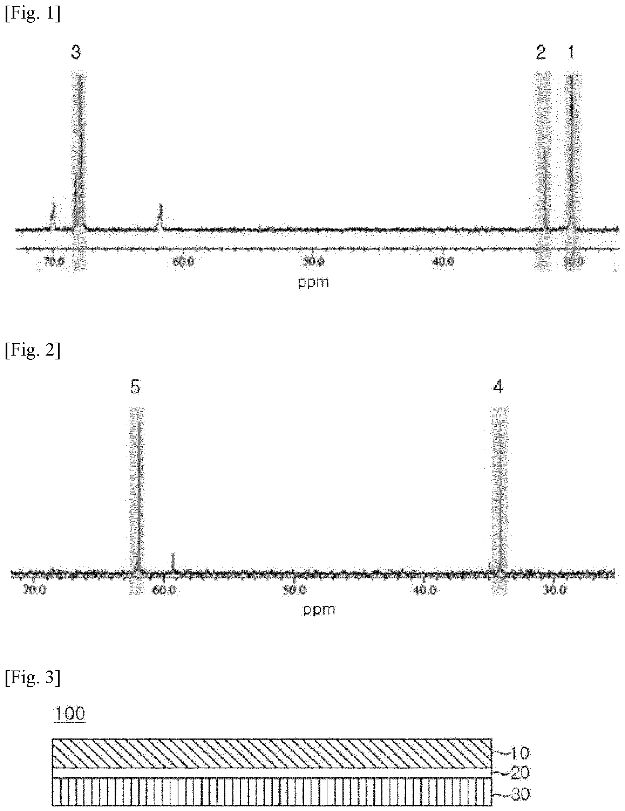

Fig. 3 is a cross-sectional view of the polishing pad according to an embodiment.

Referring to Fig. 3, the polishing pad (100) according to an embodiment may comprise a polishing layer (10) as a top-pad layer and may further comprise a support layer (30) as a sub-pad layer under the polishing layer (10). In addition, the polishing pad (100) may further comprise an adhesive layer (20) between the polishing layer (10) and the support layer (30).

The adhesive layer is interposed between the polishing layer and the support layer to serve to bond the polishing layer and the support layer to each other. Further, the adhesive layer may also serve to prevent a polishing slurry supplied to the polishing layer from leaking into the support layer. The adhesive layer may be formed using a hot melt adhesive composition.

The hot melt adhesive composition may comprise a commonly known hot melt adhesive. Specifically, the hot melt adhesive may comprise at least one selected from the group consisting of a polyurethane resin, a polyester resin, an ethylene-vinyl acetate resin, a polyamide resin, and a polyolefin resin.

In addition, the thickness of the adhesive layer is not particularly limited, but it may be, for example, 5 μm to 30 μm, 10 μm to 30 μm, 20 μm to 27 μm, or 23 μm to 25 μm. As the thickness of the adhesive layer satisfies the above range, it is possible to secure a certain level of bonding strength between the polishing layer and the support layer.

The support layer is provided under the polishing layer to serve to stably support the polishing layer and to absorb and/or disperse an impact applied to the polishing layer. The support layer may be prepared (formed) using a nonwoven fabric, suede, or a porous pad.

The thickness of the support layer is not particularly limited, but it may specifically be 0.5 mm to 4 mm, 0.6 mm to 3.5 mm, 0.8 mm to 3 mm, or 1 mm to 2 mm. In addition, the hardness of the support layer is not particularly limited, but it may be, for example, 55 Asker C to 90 Asker C, 60 Asker C to 85 Asker C, 65 Asker C to 80 Asker C, or 70 Asker C to 75 Asker C. As the thickness and hardness of the support layer each satisfy the above range, it can stably support the polishing layer, and the polishing pad can be made lighter.

The Asker C hardness of the support layer may be determined by storing the support at 25°C for 12 hours, and using a hardness meter.

**Characteristics of the polishing pad**

The polishing pad according to an embodiment has excellent characteristics such as polishing rate in a CMP process.For example, the polishing rate (removal rate) for a silicon oxide layer in a CMP process, more specifically, the polishing rate when the silicon oxide layer of a silicon wafer is polished with a ceria slurry using the polishing pad may be 2,500 Å/minute or more, 3,000 Å/minute or more, 3,500 Å/minute or more, or 3,600 Å/minute or more, and 5,000 Å/minute or less, 4,700 Å/minute or less, 4,500 Å/minute or less, or 4,200 Å/minute or less.

As a specific example, when the silicon oxide layer of a silicon wafer is polished with a ceria slurry using the polishing pad, the polishing rate may be 3,500 Å/minute to 4,700 Å/minute, 3,500 Å/minute to 4,500 Å/minute, 3,500 Å/minute to 4,200 Å/minute, 3,900 Å/minute to 4,400 Å/minute, 3,900 Å/minute to 4,250 Å/minute, or 3,950 Å/minute to 4,200 Å/minute.

Polishing rate (A/minute) = difference in thickness before and after polishing (Å) / polishing time (minute).

Specifically, the polishing rate may be a polishing rate for a silicon wafer having a diameter of 300 mm on which silicon oxide has been deposited. In addition, the polishing rate may be measured under a polishing load of 4.0 psi while the polishing pad is rotated at a speed of 150 rpm, a calcined ceria slurry is supplied onto the polishing pad at a rate of 250 ml/minute, and the platen is rotated at a speed of 150 rpm for 60 seconds. The temperature condition when the polishing rate is measured is not particularly limited, but it may be, for example, a room temperature condition.In addition, the polishing pad may have a pad cut rate of 25 $\mu$m/hr or more, 30 $\mu$m/hr or more, 35 $\mu$m/hr or more, or 38 $\mu$m/hr or more, and 50 $\mu$m/hr or less, 45 $\mu$m/hr or less, or 42 $\mu$m/hr or less. As a specific example, the pad cut rate of the polishing pad, i.e., the pad cut rate of the polishing layer, at a conditioning pressure of 6 lbf and a rotation speed of 100 rpm to 110 rpm may be 25 $\mu$m/hr to 50 $\mu$m/hr, 30 $\mu$m/hr to 50 $\mu$m/hr, or 38 $\mu$m/hr to 48.5 $\mu$m/h.

The pad cut rate may be measured by pre-conditioning the polishing pad with deionized water for 10 minutes and then conditioning while deionized water is sprayed for 1 hour to measure the change in thickness of the polishing pad. The equipment used for conditioning may be CTS AP-300HM and the disk used for conditioning may be Sasol LPX-DS2. The conditioning pressure may be 6 lbf, and the rotational speed may be 100 rpm to 110 rpm.

In a specific embodiment, the polishing pad may have a polishing rate (A/minute) in a CMP process of 3,900 Å/minute to 4,400 Å/minute and a pad cut rate ($\mu$m/hr) of 38 $\mu$m/hr to 45 $\mu$m/hr.

In another specific embodiment, the polishing pad may have a polishing rate (A/minute) in a CMP process of 3,500 Å/minute to 4,700 Å/minute and a pad cut rate ($\mu$m/hr) of 30 $\mu$m/hr to 50 $\mu$m/hr.

In addition, the polishing pad may have a compressibility (%) of 0.3% to 1.8%, 0.4% to 1.6%, 0.5% to 1.5%, 0.6% to 1.4%, or 0.8% to 1.3%.

Compressibility may be determined by placing on each polishing pad a weight (e.g. of 85 g) and using a dial thickness gauge (e.g. Yasuda, 129-E) device for 30 seconds to measure the thickness (A). An additional weight of, for example, 800 g (e.g. a weight of 85 g and a weight of 800 g together) can then be placed thereon for 3 minutes to measure the change in thickness (B). Compressibility can then be calculated using the following formula:

Compressibility = [(A - B)/A] $\times$ 100.

The polishing pad according to an embodiment may have excellent environmental friendliness as the polishing layer is prepared from a biomass-containing composition. In addition, the polymer components contained in the biomass-containing composition, more specifically, the compositions and contents of the bio-based polymer polyol and the bio-based monomer polyol in the polymer components, used in the preparation of the polishing layer in the polishing pad according to an embodiment are adjusted. As a result, it has the physical properties required for a CMP process, and the polishing rate and pad cut rate can be excellent.

For example, the polishing pad according to an embodiment may have a biomass content of 1% by weight to 50% by weight based on the total weight of the polishing pad. For example, the total content of biomass in the polishing pad may be 2% by weight to 50% by weight, 3% by weight to 50% by weight, 4% by weight to 50% by weight, 5% by weight to 50% by weight, 6% by weight to 50% by weight, 7% by weight to 50% by weight, 8% by weight to 50% by weight, 2% by weight to 45% by weight, 3% by weight to 42% by weight, 4% by weight to 38% by weight, 4.5% by weight to 36% by weight, 5% by weight to 34% by weight, 8% by weight to 32% by weight, 15% by weight to 33% by weight, or 25% by weight to 32% by weight, based on the total weight of the polishing pad.

## Process for preparing a polishing pad

According to another embodiment, there is provided a process for preparing a polishing pad as defined by the present invention (e.g. as defined above, below, or in the claims).

According to another embodiment, there is provided a process for preparing a polishing pad, which comprises preparing a urethane prepolymer comprising a polyol and a polyisocyanate; and curing the urethane prepolymer to prepare a polishing layer comprising a polyurethane resin, wherein the polyol comprises a bio-based polymer polyol.

According to another embodiment, there is provided a process for preparing a polishing pad, which comprises preparing a bio-based urethane prepolymer using a polyurethane resin comprising a polyol component and a polyisocyanate component; and curing the bio-based urethane prepolymer to prepare a polishing layer, wherein the polyol component comprises a bio-based polymer polyol and a bio-based monomer polyol.

Accordingly, the polishing pad may be provided with a polishing layer in which a urethane prepolymer comprising the bio-based polymer polyol and the bio-based monomer polyol is cured.

First, a urethane prepolymer comprising a polyol component and a polyisocyanate component is prepared. Specifically, a composition comprising the polyol component comprising the bio-based polymer polyol and the bio-based monomer polyol and the polyisocyanate may be fed to a reactor, and prepolymerization may be carried out to prepare a urethane prepolymer. The reaction conditions are not particularly limited, but the reaction temperature may be 70°C to 90°C or 75°C to 85°C, and the reaction time may be 1 hour to 4 hours or 2 hours to 3 hours.

Meanwhile, the description of the polyol and the isocyanate is the same as the description of the polyol and the isocyanate exemplified above concerning the polishing pad.

In addition, in the reaction of the polyol component (z) and the polyisocyanate component (w), the reaction ratio (z:w) thereof is not particularly limited. However, in light of the overall physical properties of the polishing layer, it may be a weight ratio of 1:2 to 14, a weight ratio of 1:3 to 12, a weight ratio of 1:4 to 10, or a weight ratio of 1:5 to 8.

The biomass-containing urethane prepolymer obtained by the reaction of the polyol component and the polyisocyanate may have a biomass content of 4% by weight to 80% by weight. For example, the biomass content of the biomass-containing urethane prepolymer may be 4% by weight to 78% by weight, 7% by weight to 76% by weight, 8% by weight to 74% by weight, 9% by weight to 72% by weight, 10% by weight to 69% by weight, 25% by weight to 67% by weight, or 45% by weight to 65 w% by weight, based on the total weight of the biomass-containing urethane prepolymer.

The biomass-containing urethane prepolymer may have a weight average molecular weight of 500 g/mole to 1,500 g/mole. For example, the weight average molecular weight of the biomass-containing urethane prepolymer may be 600 g/mole to 1,400 g/mole, 700 g/mole to 1,300 g/mole, or 800 g/mole to 1,200 g/mole.

In addition, the biomass-containing urethane prepolymer may have a terminal NCO content (NCO%) of 6% to 14% by weight. For example, the terminal NCO content (NCO%) of the biomass-containing urethane prepolymer may be 6.5% by weight to 13% by weight, 7% by weight to 12% by weight, 7.5% by weight to 11% by weight, or 8% by weight to 10% by weight. As the weight average molecular weight and NCO% of the biomass-containing urethane prepolymer each satisfy the above range, it is possible to provide a polishing pad with an excellent polishing rate in a CMP process.

Thereafter, the biomass-containing urethane prepolymer may be cured to prepare a polishing layer. Specifically, the bio-based urethane prepolymer may be cured to prepare a polishing layer comprising a polyurethane resin.

More specifically, the biomass-containing urethane prepolymer may be mixed with a curing agent, a foaming agent, a surfactant, a reaction rate controlling agent, or the like and then cast to obtain a molded body, which is cut to prepare a polishing layer.

For this purpose, the urethane prepolymer, curing agent, foaming agent, and the like may be filled into each injection line and mixed to prepare a polyurethane resin. The mixing may specifically be carried out at a speed of 1,000 rpm to 10,000 rpm, 2,500 rpm to 8,500 rpm, or 4,000 rpm to 7,000 rpm. Here, the foaming agent may be mixed via an injection line separate from the injection line for the biomass-containing urethane prepolymer, or it may be mixed with the biomass-containing urethane prepolymer in advance before the biomass-containing urethane prepolymer is filled into the injection line.

Details on the curing agent are as described above. The content of the curing agent may be 15 parts by weight to 55 parts by weight, 20 parts by weight to 50 parts by weight, 25 parts by weight to 45 parts by weight, or 30 parts by weight to 40 parts by weight, relative to 100 parts by weight of the urethane prepolymer. As the content of the curing agent satisfies the above range, it may be more advantageous for achieving a polishing pad with excellent physical properties.

The reaction ratio (curing reaction ratio) of the urethane prepolymer and the curing agent is not particularly limited, but it may be, for example, an equivalent ratio of 1:0.5 to 1.3, an equivalent ratio of 1:0.6 to 1.2, an equivalent ratio of 1:0.7 to 1.1, or an equivalent ratio of 1:0.8 to 1. As the curing reaction is carried out at the above reaction ratio, the curing reaction is optimized, whereby it is possible to provide a polishing pad with the physical properties (hardness and modulus) required for a CMP process.

The foaming agent may be, for example, a solid phase foaming agent. The content of the solid phase foaming agent may be 0.5 part by weight to 10 parts by weight, specifically, 0.7 part by weight to 8 parts by weight, 0.9 part by weight to 6 parts by weight, or 1 part by weight to 5 parts by weight, relative to 100 parts by weight of the biomass-containing urethane prepolymer. As the content of the solid phase foaming agent satisfies the above range, it may be more advantageous for achieving a polishing pad with excellent physical properties.

The surfactant is not particularly limited, but it may specifically be a silicone-based surfactant.

The reaction rate controlling agent is not particularly limited, but it may specifically comprise at least one selected from the group consisting of triethylenediamine, dimethylethanolamine, tetramethylbutanediamine, 2-methyl-triethylenediamine, dimethylcyclohexylamine, triethylamine, triisopropanolamine, 1,4-diazabicyclo(2,2,2)octane, bis(2-methylaminoethyl) ether, trimethylaminoethylethanolamine, N,N,N,N,N"-pentamethyldiethyldimethylaminoethylamine, dimethylaminopropylamine, benzyldimethylamine, N-ethylmorpholine, N,N-dimethylaminoethylmorpholine, N,N-dimethylcyclohexylamine, 2-methyl-2-azanobomene, dibutyltin dilaurate, stannous octoate, dibutyltin diacetate, dioctyltin diacetate, dibutyltin maleate, dibutyltin di-2-ethylhexanoate, and dibutyltin dimercaptide.

The step of preparing a polishing layer may comprise a procedure of injecting a composition, in which the urethane prepolymer, curing agent, and foaming agent are mixed, into a mold and subjecting it to a curing reaction. The curing reaction conditions are not particularly limited, but the curing reaction temperature may be 60°C to 130°C or 75°C to 110°C, and the mold pressure may be 50 kg/m$^2$ to 260 kg/m$^2$ or 80 kg/m$^2$ to 180 kg/m$^2$.

The process for preparing a polishing pad according to an embodiment may further comprise preparing an adhesive layer and a support layer after preparing the polishing layer. In addition, a step of cutting the surface of the polishing layer, a step of machining a groove on the surface of the polishing layer, a step of inspecting the polishing pad, a step of packaging the polishing pad, or the like may be further performed. A typical method of preparing a polishing pad may be adopted in these steps.

## Chemical mechanical polishing (CMP)

A semiconductor device may be fabricated through chemical and mechanical polishing using the polishing pad according to an embodiment.

The process for preparing a semiconductor device according to an embodiment comprises polishing the surface of a semiconductor substrate using a polishing pad. Specifically, the process for preparing a semiconductor device may comprise providing the polishing pad according to an embodiment; and relatively rotating the polishing surface of the polishing layer and the surface of a semiconductor substrate while they are in contact with each other to polish the surface of the semiconductor substrate.

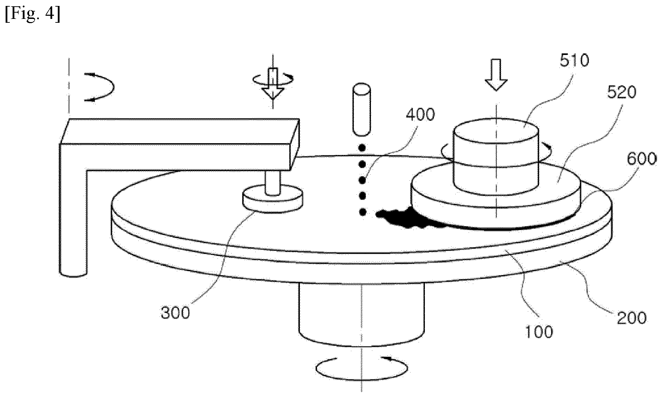

Fig. 4 illustrates a process for preparing a semiconductor device using the polishing pad according to an embodiment. Referring to Fig. 4, once the polishing pad (100) according to an embodiment has been attached to a platen (200), a semiconductor substrate (600) as an object to be polished is disposed on the polishing pad (100). In such an event, the surface of the semiconductor substrate (600) to be polished is in direct contact with the polishing surface of the polishing pad (100). A polishing slurry (400) may be sprayed through a nozzle onto the polishing pad for polishing. Thereafter, the semiconductor substrate (600) and the polishing pad (100) rotate relatively to each other, so that the surface of the semiconductor substrate (600) is polished. In such an event, the rotation direction of the semiconductor substrate (600) and the rotation direction of the polishing pad (100) may be the same direction or opposite directions. The semiconductor substrate (600) mounted on the polishing head (510) is pressed against the polishing surface of the polishing pad (100) at a predetermined load to be in contact therewith, and the surface thereof may then be polished. In addition, in order to maintain the polishing surface of the polishing pad (100) in a state suitable for polishing, the process for preparing a semiconductor device may further comprise processing the polishing surface of the polishing pad (100) with a conditioner (470) simultaneously with polishing the semiconductor substrate (600).

## Embodiments for Carrying out the Invention

Hereinafter, the present invention is explained in detail by Examples. The following Examples are intended to further illustrate the present invention, and the scope of the Examples is not limited thereto.

## [Example]

## Raw materials

The bio-based polyols used in the Examples and the Comparative Example are as follows.

- ECOTRION H1000: SK Chemical, polytrimethylene ether glycol, a molecular weight of 1,000 g/mole, an OH-value of 102.0 to 124.7 mg KOH/g, and a biomass content of 100% by weight
- Sovermol 1102: BASF, a molecular weight of 512 g/mole, an OH-value of 230 mg KOH/g, and a biomass content of 80 to 100% by weight
- Priplast 1838: Croda, a molecular weight of 2,000 g/mol, an OH-value of 52 to 60 mg KOH/g, and a biomass content of 82% by weight
- Bio-based 1,3-propanediol: a molecular weight of 76 g/mole and a biomass content of 100% by weight

**Example 1-1**

Step 1: Preparation of a bio-based urethane prepolymer

A four-neck flask was charged with 35 g of toluene diisocyanate (TDI), 5 g of 4,4'-methylenedicyclohexyl diisocyanate (H12MDI), 60 g of a bio-based polymer polyol (ECOTRION H1000), and 5 g of diethylene glycol (DEG), which were reacted at 80°C for 3 hours to prepare a bio-based urethane prepolymer with an NCO% of about 9% by weight.

Step 2: Preparation of a polishing layer

In a casting machine equipped with an injection line for inert gas, the bio-based urethane prepolymer prepared in step 1 was filled in the prepolymer tank, bis(4-amino-3-chlorophenyl) methane (Ishihara) was filled in the curing agent tank, and nitrogen ($N_2$) was used as an inert gas. Meanwhile, 1 part by weight of a solid phase foaming agent (AkzoNobel) and 1 part by weight of a silicone-based surfactant (Evonik) relative to 100 parts by weight of the urethane prepolymer were fed through separate lines to be mixed with the urethane prepolymer. The raw materials were stirred while they were fed to the mixing head at constant rates through the respective feeding lines. In such an event, the urethane prepolymer and the curing agent were fed at an equivalent ratio of 1:1, and nitrogen ($N_2$), an inert gas, was injected at a rate of 0.5 to 1.5 liters/minute. The mixed raw materials were injected into a mold (1,000 mm × 1,000 mm × 3 mm) preheated to 80°C at a charge rate of 10 kg/minute and cast at 120°C to obtain a molded article. Thereafter, the top and bottom of the molded article were each ground by a thickness of 0.5 mm to obtain a polishing layer (top-pad layer) having a thickness of 2 mm (a specific gravity of 0.82 g/cc and an average pore size of 23.6 $\mu$m).

Step 3: Preparation of a polishing pad

A support layer (sub-pad layer) with a thickness of 1.1 mm was prepared in which a polyester fiber nonwoven fabric was impregnated with a polyurethane resin. Next, the polishing layer and the support layer prepared in step 2 were combined using a hot melt adhesive to prepare a polishing pad (thickness: 3.32 mm) having a structure of a polishing layer, an adhesive layer, and a support layer.

**Example 1-2**

A four-neck flask was charged with 35 g of toluene diisocyanate (TDI), 5 g of 4,4'-methylenedicyclohexyl diisocyanate (H12MDI), 50 g of a bio-based polymer polyol (ECOTRION H1000), and 5 g of bio-based 1,3-propanediol (1,3-PDO), which were reacted at 80°C for 3 hours to prepare a biomass-based urethane prepolymer with an NCO% of about 9% by weight.
A polishing pad (thickness: 3.32 mm) having a structure of a polishing layer, an adhesive layer, and a support layer was prepared through the same procedure as in steps 2 and 3 of Example 1-1 using the urethane prepolymer prepared above.

**Example 1-3**

A four-neck flask was charged with 35 g of toluene diisocyanate (TDI), 5 g of 4,4'-methylenedicyclohexyl diisocyanate (H12MDI), and 60 g of a bio-based polymer polyol (Sovermol 1102), which were reacted at 80°C for 3 hours to prepare a biomass-based urethane prepolymer with an NCO% of about 9% by weight.
A polishing pad (thickness: 3.32 mm) having a structure of a polishing layer, an adhesive layer, and a support layer was prepared through the same procedure as in steps 2 and 3 of Example 1-1 using the urethane prepolymer prepared above.

**Example 1-4**

A four-neck flask was charged with 35 g of toluene diisocyanate (TDI), 5 g of 4,4'-methylenedicyclohexyl diisocyanate (H12MDI), 50 g of a bio-based polymer polyol (Priplast 1838), and 10 g of bio-based 1,3-propanediol (1,3-PDO), which were reacted at 80°C for 3 hours to prepare a biomass-based urethane prepolymer with an NCO% of about 9% by weight.

A polishing pad (thickness: 3.32 mm) having a structure of a polishing layer, an adhesive layer, and a support layer was prepared through the same procedure as in steps 2 and 3 of Example 1-1 using the urethane prepolymer prepared above.

**Comparative Example 1-1**

A four-neck flask was charged with 35 g of toluene diisocyanate (TDI), 5 g of 4,4'-methylenedicyclohexyl diisocyanate (H12MDI), 60 g of polytetramethylene ether glycol (PTMEG), and 5 g of diethylene glycol (DEG), which were reacted at 80°C for 3 hours to prepare a biomass-free urethane prepolymer with an NCO% of about 9%.

A polishing pad (thickness: 3.32 mm) having a structure of a polishing layer, an adhesive layer, and a support layer was prepared through the same procedure as in steps 2 and 3 of Example 1-1 using the urethane prepolymer prepared above.

The types and amounts of raw materials used to prepare the urethane prepolymers in the Examples and Comparative Example are summarized in Tables 1 and 2 below.

[Table 1]

| | | Ex. 1-1 | Ex. 1-2 | Ex. 1-3 | Ex. 1-4 | C. Ex. 1-1 |
|---|---|---|---|---|---|---|
| Urethane prepolymer | Polysocyanate | TDI 35 g | TDI 35 g | TDI 35 g | TDI 35 g | TDI 35 g |
| | | H12MDI 5 g | H12MDI 5 g | H12MDI 5 g | H12MDI 5 g | H12MDI 5 g |
| | Polymer polyol | ECOTRIO N H1000 60 g | ECOTRIO N H1000 50 g | Sovermol 1102 60 g | Priplast 1838 50 g | PTMEG 60 g |
| | Monomer polyol | DEG 5 g | 1,3-PDO 5 g | - | 1,3-PDO 10 g | DEG 5 g |

[Table 2]

| | | Ex. 1-1 | Ex. 1-2 | Ex. 1-3 | Ex. 1-4 | C. Ex. 1-1 |
|---|---|---|---|---|---|---|
| Polishing layer | NCO content (wt. %) of prepolymer | 9 | 9 | 9 | 9 | 9 |
| | Casting mold | Single layer | Single layer | Single layer | Single layer | Single layer |
| | Casting, cutting, and grooving | Sequential | Sequential | Sequential | Sequential | Sequential |
| | Content of prepolymer (part by weight) | 100 | 100 | 100 | 100 | 100 |
| | Content of surfactant (part by weight) | 0.2 to 1.5 | 0.2 to 1.5 | 0.2 to 1.5 | 0.2 to 1.5 | 0.2 to 1.5 |
| | Content of solid phase foaming agent (part by weight) | 0.5 to 1.5 | 0.5 to 1.5 | 0.5 to 1.5 | 0.5 to 1.5 | 0.5 to 1.5 |
| | Inert gas (l/min) | 0.5 to 1.5 | 0.5 to 1.5 | 0.5 to 1.5 | 0.5 to 1.5 | 0.5 to 1.5 |

**Test Example 1-1: Characteristics of the polishing pad**

(1) Hardness

Each polishing layer (a thickness of 2 mm, a width of 5 cm, and a length of 5 cm) and each support layer (a thickness of 1.1 mm, a width of 5 cm, and a length of 5 cm) were stored at 25°C for 12 hours, and a hardness meter was used to measure Shore D hardness and Asker C hardness.

(2) Tensile strength

Each polishing layer (a thickness of 2 mm, a length of 4 cm, and a width of 1 cm) was measured for the highest strength value just before fracture in a tensile test at a speed of 50 mm/minute using a universal test machine (UTM).

(3) Elongation

Each polishing layer (a thickness of 2 mm, a length of 4 cm, and a width of 1 cm) was measured for the maximum deformation length immediately before fracture in a tensile test at a speed of 50 mm/minute using a universal test machine (UTM), and the ratio of the maximum deformation length to the initial length was obtained in a percentage (%).

(4) Compressibility

A weight of 85 g was placed on each polishing pad (a thickness of 3.32 mm, a width of 25 mm, and a length of 25 mm) using a dial thickness gauge (Yasuda, 129-E) device for 30 seconds to measure the thickness (A). An additional weight of 800 g (a weight of 85 g and a weight of 800 g together) was placed thereon for 3 minutes to measure the change in thickness (B). The compressibility was then calculated.

$$\text{Compressibility} = [(A - B)/A] \times 100.$$

The results are shown in Table 3 below.

[Table 3]

| | | Evaluation | Ex. 1-1 | Ex. 1-2 | Ex. 1-3 | Ex. 1-4 | C. Ex. 1-1 |
|---|---|---|---|---|---|---|---|
| Physical properties | Polishing layer | Thickness (mm) | 2 | 2 | 2 | 2 | 2 |
| | | Hardness (Shore D) | 58.2 | 59.3 | 65.7 | 46.9 | 58 |
| | | Avg. pore size ($\mu$m) | 23.6 | 23.1 | 22.6 | 21.5 | 22.2 |
| | | Specific gravity (g/cc) | 0.82 | 0.81 | 0.8 | 0.81 | 0.81 |
| | | Tensile strength (N/mm$^2$) | 22.3 | 22.2 | 26.2 | 15.7 | 22 |
| | | Elongation (%) | 107.5 | 103.7 | 85.6 | 65.4 | 98.2 |
| | Support layer | Type | Nonwoven fabric | Nonwoven fabric | Nonwoven fabric | Nonwoven fabric | Nonwoven fabric |
| | | Thickness (mm) | 1.1 | 1.1 | 1.1 | 1.1 | 1.1 |
| | | Hardness (Asker C) | 70 | 70 | 70 | 70 | 70 |
| | Polishing pad | Thickness (mm) | 3.32 | 3.32 | 3.32 | 3.32 | 3.32 |
| | | Compressibility (%) | 1.05 | 1.05 | 1.05 | 1.05 | 1.05 |

As can be seen from Table 3 above, Examples 1-1 to 1-4 using a bio-based polymer polyol were overall good in terms of characteristics. In particular, in Examples 1-1 and 1-2 in which a bio-based polyether polyol was used, the characteristics were almost similar to those of Comparative Example 1 in which a petroleum-based polymer polyol was used, indicating that they were environmentally friendly while they had physical properties equivalent to those of conventional polishing pads.

**Test Example 1-2: Performance of the polishing pad**

(1) Polishing rate (removal rate)

Each polishing pad was fixed to the platen of a CMP machine, and a silicon wafer (diameter 300 mm) was set with the silicon oxide layer thereof facing downward. Then, a CMP process was carried out. Specifically, the silicon oxide layer was polished under a polishing load of 4.0 psi while the platen was rotated at a speed of 150 rpm for 60 seconds and a calcined ceria slurry was supplied onto the polishing pad at a rate of 250 ml/minute. Upon completion of the polishing, the silicon wafer was detached from the carrier, mounted in a spin dryer, washed with deionized water, and then dried for 15 seconds with nitrogen. The difference in the thickness of the silicon oxide layer in the dried silicon wafer before and after the polishing was measured using a spectral reflectometer type thickness measuring instrument (SI-F80R, Keyence). The polishing rate was calculated using the following equation.

Polishing rate (A/minute) = difference in thickness before and after polishing (Å) / polishing time (minute)

(2) Pad cut rate

Each polishing pad was pre-conditioned with deionized water for 10 minutes and then conditioned while deionized water was sprayed for 1 hour to measure the change in thickness of the polishing pad. Here, the equipment used for conditioning was CTS AP-300HM. The disk used for conditioning was Sasol LPX-DS2. The conditioning pressure was 6 lbf, and the rotational speed was 100 to 110 rpm.
The results are shown in Table 4 below.

[Table 4]

|  |  | Ex. 1-1 | Ex. 1-2 | Ex. 1-3 | Ex. 1-4 | C. Ex. 1-1 |
|---|---|---|---|---|---|---|
| Ceria slurry | Polishing rate (Å/min) | 4,033 | 4,026 | 4,561 | 3,549 | 4,028 |
|  | Pad cut rate (μm/hr) | 38.6 | 39.2 | 43.3 | 48.1 | 38.9 |

As can be seen from Table 4 above, Examples 1-1 to 1-4 using a bio-based polymer polyol were overall good in terms of performance. In particular, in Examples 1-1 and 1-2 in which a bio-based polyether polyol was used, the polishing rate and pad cut rate were almost similar to those of Comparative Example 1 in which a petroleum-based polymer polyol was used, indicating that they were environmentally friendly while they had performance equivalent to that of conventional polishing pads.

**Test Example 1-3: $^{13}$C-NMR spectrum**

For the polishing layer in each of the Examples and Comparative Example, 1 g of the polishing layer and 15 ml of an aqueous solution of potassium hydroxide (KOH) having a concentration of 0.3 M were charged to a sealed container having a volume of 48 ml, which were reacted for 48 hours at a temperature of 150°C to prepare a test composition. 5 mg of the test composition was dissolved in $CDCl_3$ and subjected to $^{13}$C-NMR analysis using a nuclear magnetic resonance (NMR) device (JEOL 500 MHz, 90° pulse) at room temperature. The results are shown in Tables 5 to 7 below. In addition, peaks 1 to 3 are shown in Fig. 1, and peaks 4 and 5 are shown in Fig. 2.

[Table 5]

| Peak 1 | | Peak 2 | | Peak 3 | |
|---|---|---|---|---|---|
| Position (ppm) | Area ratio | Position (ppm) | Area ratio | Position (ppm) | Area ratio |
| 28-31 | 4.4-5.7 | 31-33 | 1 | 67-71 | 8.2-8.8 |

[Table 6]

| Peak 4 | | Peak 5 | |
|---|---|---|---|
| Position (ppm) | Area ratio | Position (ppm) | Area ratio |
| 33-36 | 2.1-6.4 | 61-63 | 1 |

[Table 7]

| | | Ex. 1-1 | Ex. 1-2 | Ex. 1-3 | Ex. 1-4 | C. Ex. 1-1 |
|---|---|---|---|---|---|---|
| $^{13}$C-NMR spectrum | Peak 1 | ○ | ○ | - | - | - |
| | Peak 2 | ○ | ○ | - | - | - |
| | Peak 3 | ○ | ○ | - | - | - |
| | Peak 4 | - | ○ | - | ○ | - |
| | Peak 5 | - | ○ | - | ○ | - |

As can be seen from Table 7, some or all of peaks 1 to 5 were observed in the $^{13}$C-NMR spectra of the polishing layers prepared in some Examples. When this is reviewed together with the results of Test Examples 1 and 2, it is confirmed that the presence of peaks 1 to 5 is related to the characteristics and performance of the polishing pad.

**Example 2-1**

Step 1: Preparation of a bio-based urethane prepolymer

A four-neck flask was charged with 35 g of toluene diisocyanate (TDI), 5 g of 4,4'-methylenedicyclohexyl diisocyanate (H12MDI), 50 g of a bio-based polymer polyol (polytrimethylene ether glycol, brand name: ECOTRION H1000, manufacturer: SK Chemical, molecular weight: 1,000 g/mole, OH-value: 102.0 mg KOH/g to 124.7 mg KOH/g, biomass content: 100% by weight), and 5 g of bio-based 1,3-propanediol (molecular weight: 76 g/mole, biomass content: 100% by weight), which were reacted at 80°C for 3 hours to prepare a bio-based urethane prepolymer with an NCO% of 8 to 12% by weight.

Step 2: Preparation of a polishing layer

In a casting machine equipped with an injection line for inert gas, the bio-based urethane prepolymer prepared in step (1) was filled in the prepolymer tank, bis(4-amino-3-chlorophenyl) methane (manufacturer: Ishihara) was filled in the curing agent tank, and nitrogen (N$_2$) was used as an inert gas. In addition, 1 part by weight of a solid phase foaming agent (manufacturer: AkzoNobel) and 1 part by weight of a silicone-based surfactant (manufacturer: Evonik) relative to 100 parts by weight of the urethane prepolymer were fed through separate lines to be mixed with the urethane prepolymer. The raw materials were stirred while they were fed to the mixing head at constant rates through the respective feeding lines.
In such an event, the urethane prepolymer and the curing agent were fed at an equivalent ratio of 1:1, and nitrogen (N$_2$), an inert gas, was injected at a rate of 0.5 liters/minute to 1.5 liters/minute. The mixed raw materials were discharged at a speed of 10 kg/minute, injected into a mold (length 1,000 mm, width 1,000 mm, and height 3 mm) preheated to 80°C, and cast at 120°C to obtain a molded article. Thereafter, the top and bottom of the molded article were each ground by a thickness of 0.5 mm to obtain a polishing layer having a thickness of 2 mm (a specific gravity of 0.82 g/cc and an average pore size of 23.6 μm).

Step 3: Preparation of a polishing pad

A support layer (sub-pad layer) with a thickness of 1.1 mm was prepared in which a polyester fiber nonwoven fabric was impregnated with a polyurethane resin. Next, the polishing layer and the support layer prepared in step (2) were combined using a hot melt adhesive to prepare a polishing pad (thickness: 3.32 mm) having a structure of a polishing layer, an adhesive layer, and a support layer.

**Comparative Example 2-1**

A polishing pad was prepared in the same manner as in Example 2-1, except that, in step (1), ethylene glycol was used instead of bio-based 1,3-propanediol, and 10 g of 4,4'-methylenedicyclohexyl diisocyanate (H12MDI) was used.

**Comparative Example 2-2**

A polishing pad was prepared in the same manner as in Example 2-1, except that, in step (1), 1,4-butanediol was used instead of bio-based 1,3-propanediol, and 55 g of the bio-based polymer polyol was used.

**Comparative Example 2-3**

A polishing pad was prepared in the same manner as in Example 2-1, except that, in step (1), 30 g of toluene diisocyanate (TDI), 5 g of 4,4'-methylenedicyclohexyl diisocyanate (H12MDI), 55 g of the bio-based polymer polyol, and 5 g of 1,6-hexanediol were used.

**Test Example 2-1: Hardness**

The polishing layer and support layer of the polishing pad prepared in each of Example 2-1 and Comparative Examples 2-1 to 2-3 was measured for hardness. Specifically, each polishing layer (a thickness of 2 mm, a width of 5 cm, and a length of 5 cm) and each support layer (a thickness of 1.1 mm, a width of 5 cm, and a length of 5 cm) were stored at 25°C for 12 hours, and a hardness meter was used to measure Shore D hardness and Asker C hardness.

**Test Example 2-2: Tensile strength**

The polishing layer of the polishing pad prepared in each of Example 2-1 and Comparative Examples 2-1 to 2-3 was measured for tensile strength. Specifically, each polishing layer (a thickness of 2 mm, a length of 4 cm, and a width of 1 cm) was measured for the highest strength value just before fracture in a tensile test at a speed of 50 mm/minute using a universal test machine (UTM).

**Test Example 2-3: Elongation**

The polishing layer of the polishing pad prepared in each of Example 2-1 and Comparative Examples 2-1 to 2-3 was measured for elongation. Specifically, each polishing layer (a thickness of 2 mm, a length of 4 cm, and a width of 1 cm) was measured for the maximum deformation length immediately before fracture in a tensile test at a speed of 50 mm/minute using a universal test machine (UTM), and the ratio of the maximum deformation length to the initial length was obtained in a percentage (%).

**Test Example 2-4: Compressibility**

The polishing layer of the polishing pad prepared in each of Example 2-1 and Comparative Examples 2-1 to 2-3 was measured for compressibility. Specifically, a weight of 85 g was placed on each polishing pad (a thickness of 3.32 mm, a width of 25 mm, and a length of 25 mm) using a dial thickness gauge (Yasuda, 129-E) device for 30 seconds to measure the thickness (A). An additional weight of 800 g (a weight of 85 g and a weight of 800 g together) was placed thereon for 3 minutes to measure the change in thickness (B). The compressibility was then calculated. Compressibility = [(A - B)/A] × 100.

[Table 8]

| | | Ex. 2-1 | C. Ex. 2-1 | C. Ex. 2-2 | C. Ex. 2-3 |
|---|---|---|---|---|---|
| Polishing layer | Thickness (mm) | 2 | 2 | 2 | 2 |
| | Hardness (Shore D) | 59.3 | 65.3 | 54.1 | 51.8 |
| | Avg. pore size ($\mu$m) | 21.1 | 20.3 | 21.4 | 21.3 |
| | Specific gravity (g/cc) | 0.81 | 0.81 | 0.81 | 0.81 |
| | Tensile strength (N/mm$^2$) | 22.2 | 19.6 | 26.3 | 28.9 |
| | Elongation (%) | 103.7 | 82.5 | 116.4 | 128.8 |
| Support layer | Type | Nonwoven fabric | Nonwoven fabric | Nonwoven fabric | Nonwoven fabric |

(continued)

| | | Ex. 2-1 | C. Ex. 2-1 | C. Ex. 2-2 | C. Ex. 2-3 |
|---|---|---|---|---|---|
| | Thickness (mm) | 1.1 | 1.1 | 1.1 | 1.1 |
| | Hardness (Asker C) | 70 | 70 | 70 | 70 |
| Polishing pad | Thickness (mm) | 3.32 | 3.32 | 3.32 | 3.32 |
| | Compressibility (%) | 1.05 | 1.05 | 1.05 | 1.05 |

As can be seen from Table 8, in the polishing pad of Examples 2-1 in which a bio-based polymer polyol and a bio-based monomer polyol were used together, it was environmentally friendly while it had physical properties equivalent to those of conventional petroleum-based polishing pads.

**Test Example 2-5: Polishing rate (removal rate)**

The polishing pad prepared in each of Example 2-1 and Comparative Examples 2-1 to 2-3 was fixed to the platen of a CMP machine, and a silicon wafer (diameter 300 mm) was set with the silicon oxide layer thereof facing downward. Then, a CMP process was carried out to measure the polishing rate.

Specifically, the silicon oxide layer was polished under a polishing load of 4.0 psi while the platen was rotated at a speed of 150 rpm for 60 seconds and a calcined ceria slurry was supplied onto the polishing pad at a rate of 250 ml/minute. Upon completion of the polishing, the silicon wafer was detached from the carrier, mounted in a spin dryer, washed with deionized water, and then dried for 15 seconds with nitrogen. The difference in the thickness of the silicon oxide layer in the dried silicon wafer before and after the polishing was measured using a spectral reflectometer type thickness measuring instrument (model: SI-F80R, manufacturer: Keyence). The polishing rate was calculated according to the following equation.

Polishing rate (A/minute) = difference in thickness before and after polishing (Å) / polishing time (minute)

**Test Example 2-6: Pad cut rate**

The polishing layer of the polishing pad prepared in each of Example 2-1 and Comparative Examples 2-1 to 2-3 was measured for pad cut rate. Specifically, each polishing pad was pre-conditioned with deionized water for 10 minutes and then conditioned while deionized water was sprayed for 1 hour to measure the change in thickness of the polishing pad. Here, the equipment used for conditioning was CTS AP-300HM. The disk used for conditioning was Sasol LPX-DS2. The conditioning pressure was 6 lbf, and the rotational speed was 100 rpm to 110 rpm.

[Table 9]

| | | Ex. 2-1 | C. Ex. 2-1 | C. Ex. 2-2 | C. Ex. 2-3 |
|---|---|---|---|---|---|
| Ceria slurry | Polishing rate (Å/min) | 4,003 | 4,588 | 3,817 | 3,625 |
| | Pad cut rate ($\mu$m/hr) | 39.2 | 45.2 | 37.6 | 34.8 |

As can be seen from Table 9, in the polishing pad of Examples 2-1 in which a bio-based polymer polyol and a bio-based monomer polyol were used together, it was environmentally friendly while it had physical properties equivalent to those of conventional petroleum-based polishing pads. More specifically, in the polishing pad of Example 2-1, the biomass content and physical properties such as hardness, tensile strength, and elongation were appropriately controlled; thus, it was environmentally friendly and excellent in polishing rate and pad cut rate.

**Claims**

1.    A polishing pad, which comprises a polishing layer, wherein the polishing layer comprises a polyurethane resin, the polyurethane resin comprises a polyol and a polyisocyanate, and the polyol comprises a bio-based polymer polyol.

2.    The polishing pad of claim 1, wherein the bio-based polymer polyol has:

a molecular weight of 400 g/mole to 3,000 g/mole,
an OH-value of 35 mg KOH/g to 250 mg KOH/g,
a biomass content of 20% by weight to 100% by weight, and
a number of functional groups of 2 to 4.

3. The polishing pad of claim 1 or 2, wherein the bio-based polymer polyol comprises at least one selected from the group consisting of a bio-based polyether polyol, a bio-based polyester polyol, a bio-based polycarbonate polyol, and a bio-based polycaprolactam polyol.

4. The polishing pad of any of claims 1 to 3, wherein the polyurethane resin further comprises at least one bio-based monomer polyol, and the weight ratio of the bio-based polymer polyol and the bio-based monomer polyol is 5 to 20:0.01 to 2.

5. The polishing pad of claim 4, wherein the bio-based monomer polyol comprises at least one selected from the group consisting of bio-based 1,3-propanediol, bio-based 1,3-butanediol, bio-based 1,4-butanediol, bio-based 2,3-butanediol, bio-based 1,5-pentanediol, bio-based 1,9-nonanediol, bio-based 1,10-decanediol, and bio-based isosorbide.

6. The polishing pad of claim 4 or 5, wherein the bio-based monomer polyol has:

a biomass content of 50% by weight or more,
an OH-value of 50 mg KOH/g to 200 mg KOH/g, and
a weight average molecular weight of 50 g/mole to 200 g/mole.

7. The polishing pad of any of claims 1 to 6, wherein, when 1 g of the polishing layer is added to an aqueous solution of potassium hydroxide (KOH) having a concentration of 0.3 M, which is reacted for 48 hours at a temperature of 150°C in a sealed container to obtain a test composition, and a $^{13}$C-NMR spectrum is measured therefor, it comprises:

a first peak appearing between 28 ppm and 31 ppm;
a second peak appearing between 31 ppm and 33 ppm; and
a third peak appearing between 67 ppm to 71 ppm.

8. The polishing pad of claim 7, wherein the ratio of the area of the first peak to the area of the second peak is 4.4 to 5.7, and the ratio of the area of the third peak to the area of the second peak is 8.2 to 8.8.

9. The polishing pad of claim 7 or 8, which further comprises a fourth peak appearing between 33 ppm and 36 ppm; and a fifth peak appearing between 61 ppm to 63 ppm, and the ratio of the area of the fourth peak to the area of the fifth peak is 2.1 to 6.4.

10. The polishing pad of any of claims 1 to 9, wherein the polyisocyanate comprises at least one selected from the group consisting of toluene diisocyanate (TDI), naphthalene-1,5-diisocyanate, p-phenylene diisocyanate, tolidine diisocyanate, 4,4'-diphenylmethane diisocyanate, hexamethylene diisocyanate, 4,4'-methylenedicyclohexyl diisocyanate (H12MDI), and isoporone diisocyanate.

11. The polishing pad of any of claims 1 to 10, wherein the polishing layer has:

a hardness of 45 Shore D to 70 Shore D,
a tensile strength of 15 N/mm$^2$ to 27 N/mm$^2$, and
an elongation of 50% to 150%.

12. The polishing pad of any of claims 1 to 11, wherein the polishing pad has a polishing rate (A/minute) in a CMP process of 3,500 Å/minute to 4,700 Å/minute, and a pad cut rate ($\mu$m/hr) of 30 $\mu$m/hr to 50 $\mu$m/hr.

13. A process for preparing a polishing pad, which comprises:

preparing a urethane prepolymer comprising a polyol and a polyisocyanate; and
curing the urethane prepolymer to prepare a polishing layer comprising a polyurethane resin,
wherein the polyol comprises a bio-based polymer polyol.

14. The process for preparing a polishing pad of claim 13, wherein the polyol comprises a bio-based polymer polyol and a bio-based monomer polyol.

[Fig. 1]

[Fig. 2]

[Fig. 3]

[Fig. 4]

Europäisches
Patentamt

European
Patent Office

Office européen
des brevets

# EUROPEAN SEARCH REPORT

Application Number

EP 24 19 5441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 431 237 A1 (SK ENPULSE CO LTD [KR]) 18 September 2024 (2024-09-18) * abstract * * paragraphs [0009], [0018] - [0020] * * paragraphs [0023] - [0032] * * paragraphs [0035] - [0036] * * paragraphs [0073] - [0076] * * examples 1, 2 * * claims * | 1-14 | INV. C08G18/10 C08G18/32 C08G18/38 C08G18/42 C08G18/48 C08G18/66 C08G18/72 C08G18/75 C08G18/76 |
| X | KR 2018 0117900 A (MONOLITH CO LTD [KR]) 30 October 2018 (2018-10-30) * abstract * | 1-14 | |
| X | US 2023/151179 A1 (SHIMIZU YASUTOMO [JP] ET AL) 18 May 2023 (2023-05-18) * abstract * * paragraphs [0137] - [0156] * * paragraphs [0191], [0192] * * paragraphs [0232], [0238], [0266], [0267], [0284]; example 10; table 1 * * claims * | 1-14 | |
| X | US 2021/079216 A1 (SHINOHARA NAOKI [JP] ET AL) 18 March 2021 (2021-03-18) * abstract * * paragraphs [0002], [0008], [0038] - [0041] * * paragraphs [0050] - [0071], [0075] - [0077], [0082] - [0084] * * paragraphs [0180], [0181] * * paragraph [0254]; examples; tables * * claims * | 1-14 | |

TECHNICAL FIELDS
SEARCHED          (IPC)

C08G

The present search report has been drawn up for all claims

| Place of search | Date of completion of the search | Examiner |
|---|---|---|
| Munich | 21 February 2025 | Nazario, Luis |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 5441

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2025

| Patent document cited in search report | | | Publication date | Patent family member(s) | | | Publication date |
|---|---|---|---|---|---|---|---|
| EP 4431237 | A1 | | 18-09-2024 | CN | 118664499 | A | 20-09-2024 |
| | | | | EP | 4431237 | A1 | 18-09-2024 |
| | | | | JP | 2024132923 | A | 01-10-2024 |
| | | | | KR | 102623531 | B1 | 12-01-2024 |
| | | | | TW | 202438549 | A | 01-10-2024 |
| | | | | US | 2024308022 | A1 | 19-09-2024 |
| KR 20180117900 | A | | 30-10-2018 | NONE | | | |
| US 2023151179 | A1 | | 18-05-2023 | CN | 115379926 | A | 22-11-2022 |
| | | | | JP | WO2021201088 | A1 | 07-10-2021 |
| | | | | KR | 20220161318 | A | 06-12-2022 |
| | | | | TW | 202204461 | A | 01-02-2022 |
| | | | | US | 2023151179 | A1 | 18-05-2023 |
| | | | | WO | 2021201088 | A1 | 07-10-2021 |
| US 2021079216 | A1 | | 18-03-2021 | CN | 112424252 | A | 26-02-2021 |
| | | | | EP | 3805287 | A1 | 14-04-2021 |
| | | | | JP | 7268015 | B2 | 02-05-2023 |
| | | | | JP | 2023059934 | A | 27-04-2023 |
| | | | | JP | WO2019230541 | A1 | 08-07-2021 |
| | | | | KR | 20200143472 | A | 23-12-2020 |
| | | | | US | 2021079216 | A1 | 18-03-2021 |
| | | | | WO | 2019230541 | A1 | 05-12-2019 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20180044771